**Europäisches Patentamt**

(19) **European Patent Office**

**Office européen des brevets**

(11) Veröffentlichungsnummer: **0 034 651**
**B1**

(12) **EUROPÄISCHE PATENTSCHRIFT**

(45) Veröffentlichungstag der Patentschrift:
07.09.83

(51) Int. Cl.³: **B 23 K 1/08**, B 23 K 3/00

(21) Anmeldenummer: **80106435.3**

(22) Anmeldetag: **22.10.80**

(54) Einrichtung zum Beaufschlagen der Anschlüsse von integrierten Bausteinen mit Lot.

(30) Priorität: 30.01.80 CH 738/80

(43) Veröffentlichungstag der Anmeldung:
02.09.81 Patentblatt 81/35

(45) Bekanntmachung des Hinweises auf die Patenterteilung:
07.09.83 Patentblatt 83/36

(84) Benannte Vertragsstaaten:
AT BE DE FR GB IT NL SE

(56) Entgegenhaltungen:
**IBM TECHNICAL DISCLOSURE BULLETIN, Band 18, Nr. 10, März 1976, New York, USA F. H. SARNACKI: »Solder thump«, Seiten 3182—3183**
**ELEKTRO TECHNIK, Band 44, Nr. 16, 21 April 1962, Würzburg, DE W. SCHALLEHN: »Das Fließlötverfahren«, Seiten 213—216**

(73) Patentinhaber: **SIEMENS-ALBIS AKTIENGESELLSCHAFT, EGA1/Verträge und Patente Postfach, CH-8047 Zürich (CH)**

(72) Erfinder: **Forstner, Anton, Gassackerstrasse 19, CH-8953 Dietikon (CH)**
Erfinder: **Schatzmann, Kurt, Hätschenstrasse 12, CH-8953 Dietikon (CH)**

Einrichtung zum Beaufschlagen der Anschlüsse von integrierten Bausteinen mit Lot

Die vorliegende Erfindung betrifft eine Einrichtung gemäß dem Oberbegriff des Anspruches 1.

Eine solche Einrichtung ist durch IBM Technical Disclosure Bulletin, Band 18, Nr. 10, März 1976, New York, USA, Seiten 3182–3183, bekannt.

IC-Bausteine im Doppelreihen-(DIL-)Gehäuse, d. h. in integrierter Technik aufgebaute Bauelementeeinheiten, finden immer mehr Verwendung in elektronischen Anlagen, da sie eine hohe Packungsdichte der Komponenten aufweisen und damit ein geringes Volumen und ein geringes Gewicht ermöglichen. Ein anderer Vorteil ist die drastische Reduktion der Anzahl von Lötverbindungen beim Aufbau von umfangreichen Baugruppen, was sich nicht zuletzt auf die mittlere fehlerfreie Betriebszeit einer Anlage günstig auswirkt. Es werden jedoch immer höhere Anforderungen an die Lötstellen gestellt. Oft genügen die Anschlüsse von handelsüblichen IC-Bausteinen hinsichtlich ihrer Lötbarkeit diesen Anforderungen nicht, weshalb nach dem Verlöten noch aufwendige Prüf- und Nachlötarbeiten notwendig werden, um eine einwandfreie Qualität der Lötstellen und damit die störungsfreie Funktion der aus solchen Bausteinen aufgebauten Geräteeinheiten sicherzustellen.

Diesen Nachteilen kann dadurch begegnet werden, daß vor dem eigentlichen Verlöten auf den Baugruppen die Anschlüsse der IC-Bausteine vorverzinnt werden. Dabei stellt sich das Problem, jeden Anschluß möglichst vollständig und gleichmäßig mit Lot zu benetzen, insbesondere bis möglichst nahe an dessen Biegestelle hinauf zu verzinnen. Beim vertikalen Eintauchen der Anschlüsse in ein Lotbad ist deren maximale Eintauchtiefe jedoch im wesentlichen durch den Abstand der Grundfläche des Bausteines von den freien Enden der Anschlüsse gegeben. Ferner ist zu berücksichtigen, daß im eingetauchten Zustand ein Sicherheitsabstand zwischen Baustein und Lotbadoberfläche einzuhalten ist, um den Baustein vor einer unzulässigen Erwärmung zu schützen, was wiederum die maximale Eintauchtiefe der Anschlüsse begrenzt.

Der vorliegenden Erfindung liegt daher die Aufgabe zugrunde, ein rationelles Vorverzinnen der Anschlüsse verschiedener Typen von IC-Bausteinen im DIL-Gehäuse mit möglichst großer Eintauchtiefe in das Lotbad zu ermöglichen. Dies wird mit einer Einrichtung erreicht, wie sie in den Ansprüchen gekennzeichnet ist.

Die erfindungsgemäße Einrichtung bringt den Vorteil mit sich, daß die Anschlüsse nun sehr weit hinauf vorverzinnt werden können, ohne daß der Baustein einer vom Lotbad herrührenden übermäßigen Wärmebelastung ausgesetzt ist. Ferner läßt sich die vorgeschlagene Einrichtung ohne Schwierigkeiten in einem automatischen Prozeß integrieren.

Anhand von Zeichnungen wird die Erfindung nachfolgend beispielsweise näher erläutert. Es zeigen

Fig. 1 und 2 je ein Schnittbild der erfindungsgemäßen Einrichtung,

Fig. 3 Einzelheiten zur Schwenkbewegung des die zu verzinnenden Bausteine aufnehmenden Trägers der Einrichtung.

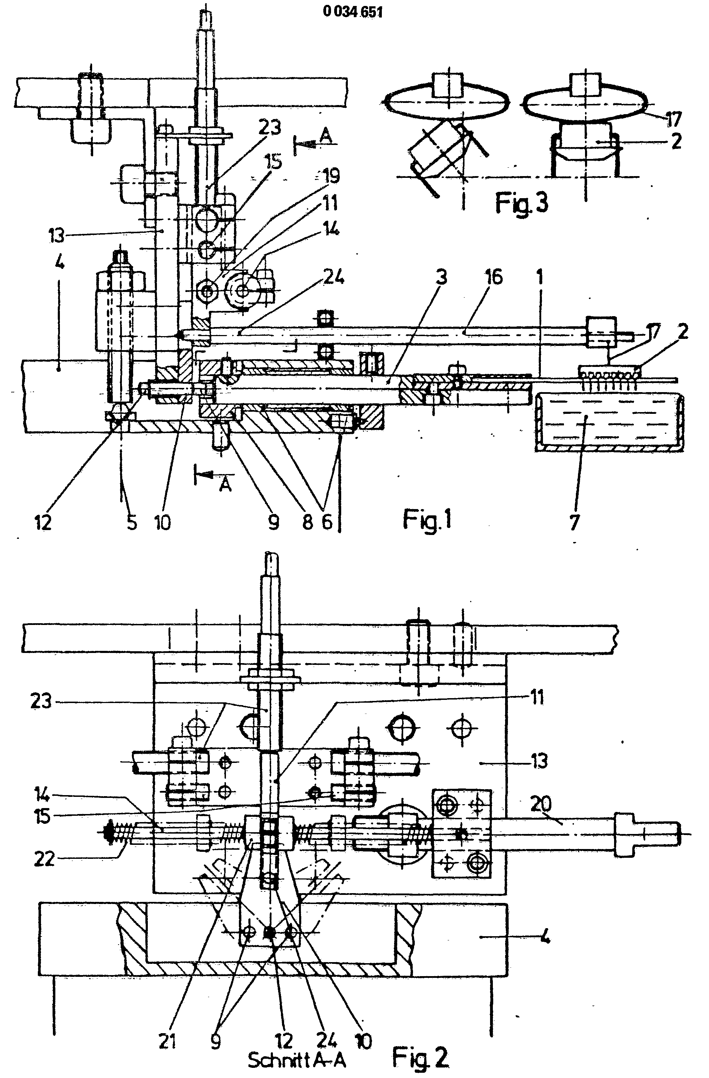

In den Fig. 1 und 2 sind die wesentlichen Bestandteile der Einrichtung dargestellt. Dabei stellt Fig. 2 einen Schnitt A-A von Fig. 1 dar. Auf einem Träger 1 ist ein Baustein 2 im bekannten Doppelreihen-Gehäuse (Dual-in-Line-Gehäuse) aufgesetzt. Aus dem eine integrierte Schaltung umschließenden Kunststoffgehäuse treten beidseitig eine Anzahl in der Regel äquidistanter Anschlüsse aus, die zwecks Verbesserung der Lötbarkeit vorverzinnt werden sollen. Der Träger 1 ist an einem Kipparm 3 befestigt, der seinerseits an einem Drehtisch 4 angebracht ist. Der wenigstens teilweise zylindrische Kipparm 3 ist in Gleitbüchsen 6 des Drehtisches 4 drehbar eingesetzt. Am Drehtisch 4 können mehrere Kipparme 3 mit einem Träger 1 vorgesehen werden, die bei Drehung des Drehtisches 4 um einen bestimmten Winkel in einer zur Zeichenfläche senkrechten Ebene in die in Fig. 1 gezeigte Lage gebracht werden. In dieser Lage befindet sich der auf dem Träger 1 liegende Baustein 2 über der Oberfläche eines sich in einem Behälter befindlichen Lotbades 7. Das Lotbad 7 läßt sich in Richtung des Trägers 1 mittels nicht dargestellter Mittel anheben bzw. absenken. Der Drehtisch 4 ist um eine Achse 5 drehbar bezüglich einer Trägerplatte 13 angeordnet. An dem der Achse 5 zugewandten Ende des Kipparms 3 ist eine Kupplungshülse 8 angebracht. In diese Kupplungshülse 8 greifen in der gezeichneten Lage des Kipparms 3 zwei Mitnehmerstifte 9 ein. Die Mitnehmerstifte 9 sind in einer Schwenkgabel 10 eingelassen, die über eine Drehachse 12 drehbar mit der Trägerplatte 13 verbunden ist. Ferner ist die Schwenkgabel 10 beweglich mit einem Mitnehmer 11 verbunden, so daß sie bei einer parallel zur Trägerplatte 13 verlaufenden linearen Bewegung des Mitnehmers 11 um die Drehachse 12 ausgelenkt wird. Dies wird durch einen mit dem Mitnehmer 11 verbundenen Stift 24 erreicht, der in eine Aussparung der Schwenkgabel 10 eingreift und in dieser geführt ist. Der bewegte Mitnehmer 11 wird entlang einer parallel zur Trägerplatte 13 verlaufenden stangenförmigen Schiene 14 geführt. Der Mitnehmer 11 ist zudem fest mit der Kolbenstange 19 eines doppelt wirkenden Zylinders 20 verbunden, der in bekannter Weise pneumatisch betätigbar ist. Bei Betätigung des Zylinders 20 wird der Mitnehmer 11 entlang der Schiene 14 in der einen oder anderen Richtung (in Fig. 2 entweder nach links oder nach rechts) aus der gezeigten Mittelstellung verschoben. Eine zwischen dem Schienenende und einem Druckring 21 eingefügte Feder 22 sorgt dafür, daß der Mitnehmer 11 wieder in die Ausgangslage gelangt, sobald die Wirkung des Zylinders 20 aufgehoben ist. In Fig. 2 sind die zwei Endstellungen der Druckringe 21 und die entsprechenden Stellungen des Mitnehmers 11 nach Betätigung des Zylinders 20 stichliert angedeutet. Über induktive Abtastelemente 23 wird zuhanden einer Steuereinrichtung die jeweilige Stellung des Mitnehmers 11 erfaßt. Der vom Mitnehmer 11 bei dessen Bewegung zurückgelegte Weg wird in beiden Richtungen mittels Stellelementen 15 wahlweise begrenzt und damit der Auslenkwinkel der Schwenkgabel 10 vorgegeben.

Am Mitnehmer 11 ist ferner noch ein über dem Kipparm 3 verlaufender Halter 16 angebracht, der der Bewegung des Mitnehmers 11 folgt und an dessen freiem Ende ein federnder Drahtbügel 17 befestigt ist, der auf den darunter liegenden Baustein 2 drückt und diesen während der Schwenkbewegung des Kipparms 3 auf dem Träger 1 festhält. Entgegen der gezeigten Ausführungsform ist es auch möglich, den Halter 16 an der Schwenkgabel 10 anzubringen oder aber anstelle des Halters 16 auf jedem Träger 1 eine den Baustein 2 festhaltende Klemmvorrichtung vorzusehen, die jeweils nach dem Laden des Bausteins 2 geschlossen und vor dem Entladen wieder geöffnet wird. Der Träger 1 selbst ist plattenförmig und besteht aus einem wärmeisolierenden, elektrisch nicht leitenden Material. Der Querschnitt des Trägers 1 ist vorzugsweise trapezförmig, wodurch sich beim Eintauchen der Anschlüsse eines Bausteins 2 in das Lotbad 7 nach erfolgtem Kippen des Kipparms 3 optimale Verhältnisse in bezug auf die Eintauchtiefe der Anschlüsse ergeben. Dies ist in Fig. 3 verdeutlicht, wo rechts ein Baustein 2 in der horizontalen Ausgangslage und links in gekippter Lage dargestellt ist. Mit einer waagrechten Linie ist dabei die Oberfläche des Lotbades angegeben. Aus der Figur ist erkennbar, daß die Eintauchtiefe der Anschlüsse in gekippter Lage gegenüber dem vertikalen Eintauchen vergrößert wird, ohne daß dabei die Wärmebelastung des Bausteins 2 wesentlich zunimmt, da immer noch ein genügender Abstand der Bausteingrundfläche von der Lotbadoberfläche bestehen bleibt. Die Eintauchtiefe der Anschlüsse kann durch entsprechende Wahl des Abstandes des Lotbadspiegels vom Träger 1 und/oder des Auslenkwinkels der Schwenkgabel 10 sehr einfach festgelegt werden. Um den Baustein 2 während der Drehung des Drehtisches 4 auf dem Träger 1 festzuhalten, ist der Träger 1 an seinen beiden Längsseiten mit Aussparungen versehen, in die die Anschlüsse des Bausteins 2 hineinragen, wodurch dessen Verschiebung in Längsrichtung auf dem Träger 1 verhindert ist.

Die Funktionsweise der beschriebenen Einrichtung ist die folgende:

In einer nicht gezeichneten Stellung des Drehtisches 4 gelangt ein aus einem Magazin zugeführter Baustein 2 auf den Träger 1.

Nachdem die Anschlüsse des Bausteins mit einem Flußmittel benetzt worden sind, gelangt im Laufe eines getakteten Ablaufs der Kipparm 3 in die in Fig. 1 gezeigte Lage, so daß der vorzuverzinnende Baustein 2 sich über dem Lotspiegel des Lotbades 7 befindet und durch den Bügel 17 auf dem Träger 1 festgehalten wird. Nun wird der Mitnehmer 11 durch Betätigung des Zylinders 20 in einer Richtung verschoben, was ein Auslenken der Schwenkgabel 10 um einen durch das Stellelement 15 bestimmten Winkel zur Folge hat. Über die Mitnehmerstifte 9 führt der Kipparm 3 und damit auch der Baustein 2 eine Kippbewegung aus. Hierauf wird das Lotbad 7 bis auf eine bezüglich der Lage des Trägers 1 definierte Höhe angehoben. Dabei wird die tieferliegende Anschlußreihe des um eine in seiner Längsrichtung parallel zu den Anschlußreihen verlaufende Achse gekippten Bausteins 2 in das Lotbad 7 eingetaucht. Nach einer festgelegten Lötzeit wird der Mitnehmer 11 in die andere Richtung verschoben und demzufolge der Kipparm 3 um den gleichen Winkel auf die andere Seite gekippt. In Fig. 2 sind zwei mögliche Lagen der Schwenkgabel 10 strichliert angedeutet. Beim Übergang von einer Lage des Kipparms 3 zur anderen wird die eine Anschlußreihe des Bausteins 2 aus dem Lotbad 7 herausgezogen und die andere Anschlußreihe in das Lotbad 7 eingetaucht. Nach Ablauf der festgelegten Lötzeit gelangt der Träger 1 durch entsprechende Verschiebung des Mitnehmers 11 wiederum in die horizontale Ausgangslage und das Lotbad 7 wird wieder gesenkt. Anschließend wird der Drehtisch 4 um einen bestimmten Winkel weitergedreht, so daß der nächste Kipparm 3 von den Mitnehmerstiften 9 erfaßt wird und somit ein weiterer Baustein 2 in beschriebener Art und Weise verzinnt werden kann. Das an sich bekannte Entfernen der sich infolge Oxydation auf der Lotbadoberfläche bildenden Schlacke kann beispielsweise jeweils unmittelbar vor dem Anheben des Lotbades 7 mittels bekannter Mittel erfolgen. In einer wiederum nicht gezeigten Stellung des Drehtisches 4 werden die vorverzinnten Anschlüsse des Bausteins 2 dann von den Flußmittelrückständen befreit und der Baustein 2 schließlich einem Sammelbehälter zugeführt.

Mit der beschriebenen Einrichtung können grundsätzlich alle üblichen Typen von IC-Bausteinen im DIL-Gehäuse vorverzinnt werden. Je nach Typ ist lediglich ein entsprechend ausgebildeter Träger 1 notwendig. Hierzu ist der Träger 1 über eine einfache Klemmeinrichtung auswechselbar mit dem Kipparm 3 verbunden und kann somit rasch ersetzt werden.

**Patentansprüche**

1. Einrichtung zum Beaufschlagen der Anschlüsse von integrierten Bausteinen (2) im Doppelreihen-Gehäuse mit einem sich in einem Lotbad (7) befindlichen Lot, dadurch gekennzeichnet, daß wenigstens ein Träger (1) zur Aufnahme wenigstens eines Bausteins (2) vorhanden ist, welcher Träger (1) derart relativ zum Lotbad (7) verschiebbar ist, daß der Baustein (2) in eine Lage gelangt, in der sich dessen Anschlüsse in einem bestimmten Abstand über der Oberfläche des Lotbades (7) befinden, und daß der Träger (1) in dieser Lage um eine parallel zu den Anschlüssen des aufliegenden Bausteins (2) verlaufende Achse derart in eine bezüglich der Oberfläche des Lotbades (7) geneigte Lage kippbar ist, daß nach dem Kippen auf die eine oder andere Seite jeweils die Anschlüsse einer Anschlußreihe des Bausteins (2) gleichzeitig in das Lotbad (7) eintauchen.

2. Einrichtung nach Anspruch 1, dadurch gekennzeichnet, daß mehrere je einen auswechselbaren Träger (1) aufweisende Kipparme (3) vorgesehen sind, die sternförmig an einem Drehtisch (4) angeordnet sind, bei dessen Drehung die Träger (1) aufeinanderfolgend in eine sich über dem Lotbad (7) befindliche Lage gebracht werden.

3. Einrichtung nach Anspruch 2, dadurch gekennzeichnet, daß die Kipparme (3) jeweils in der Lage, in der sich der zugehörige Träger (1) über dem Lotbad (7) befindet, über Kupplungsglieder (8, 9) mit einer Schwenkgabel (10) gekoppelt sind, die um eine Drehachse (12) drehbar ist.

4. Einrichtung nach Anspruch 3, dadurch gekennzeichnet, daß die Auslenkung der Schwenkgabel (10) über einen beweglich mit dieser verbundenen Mitnehmer (11) erfolgt, der fest mit der Kolbenstange (19) eines Zylinders (20) verbunden ist und der bei Betätigung des Zylinders (20) eine Linearbewegung entlang einer Schiene (14) ausführt.

5. Einrichtung nach Anspruch 4, dadurch gekennzeichnet, daß der maximale Verschiebungsweg des Mitnehmers (11) und damit die Neigung des Trägers (1) bezüglich der Oberfläche des Lotbades einstellbar ist.

6. Einrichtung nach einem der Ansprüche 1 bis 5, dadurch gekennzeichnet, daß der Träger (1) Aussparungen zur Aufnahme der Anschlüsse des aufliegenden Bausteins (2) aufweist und daß ferner ein Halteelement (17) vorgesehen ist, das den Baustein (2) auf den Träger (1) drückt, solange sich dieser über dem Lotbad (7) befindet.

**Claims**

1. Apparatus for supplying the terminals of integrated modules (2) in a double-row housing with solder contained in a solder bath (7), characterised in that at least one carrier (1) is provided for the reception of at least one module (2), which carrier (1) is displaceable relative to the solder bath (7) in such a way that the module (2) reaches a position in which the terminals of said module are arranged at a specific distance above the surface of the solder bath (7); that, in this position, the carrier (1) can be tilted about an axis running parallel to the terminals of the supported module (2), into a position which is inclined relative to the surface of the solder bath (7), in such a way that, after the tilting step to one side or the other, the terminals of a terminal row of the module (2) dip simultaneously into the solder bath (7).

2. Apparatus as claimed in Claim 1, characterised in that a plurality of tilting arms (3) are provided, each having a respective exchangeable carrier (1) and which are radially arranged on a rotary table (4), by the rotation of which the carriers (1) are successively brought into a position above the solder bath (7).

3. Apparatus as claimed in Claim 2, characterised in that each of the tilting arms (3) when in the position in which the carrier (1) belonging thereto is located above the solder bath (7), is coupled via coupling members (8, 9) to a swivelling fork (10) which is rotatable about an axis of rotation (12).

4. Apparatus as claimed in Claim 3, characterised in that the deflection of the swivelling fork (10) is effected by a driving means (11) which is movably connected thereto, and is fixedly connected to the piston rod (19) of a cylinder (20), and which on operation of the cylinder (20), executes a linear movement along a rail (14).

5. Apparatus as claimed in Claim 4, characterised in that the maximum displacement path of the driving means (11), and thus the inclination of the carrier (1) relative to the surface of the solder bath, is adjustable.

6. Apparatus as claimed in one of Claims 1 to 5, characterised in that the carrier (1) has recesses to receive the terminals of the supported module (2); and that, moreover, a supporting element (17) is provided, which presses the module (2) on to the carrier (1), so long as the latter is above the solder bath (7).

**Revendications**

1. Installation pour charger les connexions de modules intégrés (2) dans un boîtier double ligne avec de la soudure contenue dans un bain de soudure (7), caractérisée par le fait qu'il est prévu au moins un support (1) destiné à recevoir au moins un module (2), lequel support (1) est déplaçable de telle façon par rapport au bain de soudure (7) que le module (2) est amené dans une position dans laquelle ses connexions se trouvent à une certaine distance au-dessus de la surface du bain de soudure (7), et que le support (1) est susceptible, dans cette position, d'être basculé de telle manière autour d'un axe s'étendant parallèlement aux connexions du module (2) qui y repose, dans une position inclinée par rapport à la surface du bain de soudure (7) qu'après le basculement d'un côté ou de l'autre les connexions respectives d'une ligne de connexions du module (2) plongent simultanément dans le bain de soudure (7).

2. Installation selon la revendication 1, caractérisée par le fait que sont prévus plusieurs bras basculant (3) dont chacun comportant un support (1) échangeable, lesdits bras basculant étant disposés en étoile sur une table tournante (4) lors de la rotation de laquelle les supports (1) sont amenés successivement dans une position qui se situe au-dessus du bain de soudure (7).

3. Installation selon la revendication 2, caractérisée en ce que chaque bras basculant (3), dans la position dans laquelle le support associé (1) se trouve au-dessus du bain de soudure (7), est accouplé par l'intermédiaire d'éléments d'accouplement (8, 9) à une fourche basculante (10) susceptible de tourner autour d'un axe de rotation (12).

4. Installation selon la revendication 3, caractérisée par le fait que la déviation de la fourche basculante (10) a lieu par l'intermédiaire d'un entraîneur (11) relié à cette dernière, qui est solidaire d'un cylindre (20) et qui, lorsque le cylindre (20) est actionné, exécute un mouvement linéaire le long d'un rail (14).

5. Installation selon la revendication 4, caractérisée par le fait que la course maximale de déplacement de l'entraîneur (11) et, par voie de conséquence, l'inclinaison du support (1) par rapport à la surface du bain est réglable.

6. Installation l'une des revendications 1 à 5, caractérisée par le fait que le support (1) comporte des ouvertures pour recevoir les connexions du module (2) qui y repose et qu'il est en outre prévu un élément de maintien (17) qui applique le module (2) contre le support (1), tant que ce dernier se trouve au-dessus du bain de soudure (7).

0 034 651

Fig. 1

Fig. 2

Fig. 3

Schnitt A-A

7